# FASCICULE DE BREVET EUROPEEN

(11) **EP 4 251 667 B1**
(45) Date de publication et mention de la délivrance du brevet: **19.02.2025**
(21) Numéro de dépôt: 21823972.1
(22) Date de dépôt: 22.11.2021
(51) Int. Cl.: C08F 297/08, C08F 210/02

(54) **POLYMÈRE TRIBLOC DIÉNIQUE RICHE EN ÉTHYLÈNE AYANT UN BLOC STATISTIQUE ET DEUX BLOCS TERMINAUX POLYÉTHYLÈNE**
ETHYLENREICHES DIEN-TRIBLOCKPOLYMER MIT STATISTISCHEM BLOCK UND ZWEI ENDSTÄNDIGEN POLYETHYLENBLÖCKEN
ETHYLENE-RICH DIENE TRIBLOCK POLYMER HAVING A STATISTICAL BLOCK AND TWO TERMINAL POLYETHYLENE BLOCKS

(30) Priorité: 26.11.2020 FR 2012206
(43) Date de publication de la demande: 04.10.2023
(73) Titulaire: COMPAGNIE GENERALE DES ETABLISSEMENTS MICHELIN, 63000 Clermont-Ferrand (FR); Centre National de la Recherche Scientifique, 75794 Paris Cedex 16 (FR); Ecole Superieure de Chimie, Physique, Electronique de Lyon, 69616 Villeurbanne (FR); Université Claude Bernard Lyon 1, 69622 Villeurbanne Cedex (FR)
(72) Inventeur: BAULU, Nicolas, 63040 CLERMONT-FERRAND Cedex 9 (FR); BOISSON, Christophe, 01390 TRAMOYES (FR); D'AGOSTO, Franck, 69740 GENAS (FR); MONTARNAL, Damien, 38300 Ruy Montceau (FR); MORESO, Emma, 63040 CLERMONT-FERRAND Cedex 9 (FR); THUILLIEZ, Julien, 63040 CLERMONT-FERRAND Cedex 9 (FR); JEAN-BAPTISTE-DIT-DOMINIQUE, François, 63040 CLERMONT-FERRAND Cedex 9 (FR)
(74) Mandataire: M.F.P. Michelin
(86) Numéro de dépôt international: PCT/FR2021/052058
(87) Numéro de publication internationale: WO 2022/112699

(56) Documents cités:
- EP-A1- 2 599 809
- WO-A1-2014/114607
- JP-A- H08 291 238
- JP-A- H09 255 742

## Description

Le domaine de la présente invention est celui des copolymères diéniques riches en unités éthylène.

Il a été montré que des copolymères statistiques à base d'éthylène et de 1,3-diène et riches en unités éthylène présentent des propriétés intéressantes de rigidité, d'hystérèse, d'usure et d'adhésion. On peut par exemple se référer aux demandes de brevet WO 2014114607 A1, WO 2016012259 A1 et WO 2016087248 A1.

Un autre avantage de ces copolymères est l'utilisation d'éthylène qui est un monomère courant et disponible sur le marché, et accessible par voie fossile ou biologique. Un autre avantage de ces copolymères est la présence d'unités éthylène le long du squelette de polymères, unités largement moins sensibles que les unités diéniques aux mécanismes de dégradation oxydantes ou thermo-oxydantes, ce qui confère aux matériaux une meilleure stabilité et durée de vie.

La maîtrise de la rhéologie d'un polymère est un paramètre clef dans l'industrialisation et l'utilisation d'un polymère. La fabrication d'articles tout ou partie constitués d'un polymère fait généralement appel à différentes opérations telles que le malaxage, l'extrusion, le moulage, etc ..., opérations au cours desquelles le polymère est soumis à une large gamme de sollicitations en fréquence. La rhéologie du polymère doit se prêter à ces différentes opérations pour satisfaire les critères de qualité de l'article à fabriquer et les critères de productivité dans la chaîne de fabrication de l'article. En particulier, une viscosité élevée aux déformations à basse fréquence est souhaitable pour limiter les phénomènes d'écoulement du polymère. Des solutions pour augmenter la viscosité aux bas taux de cisaillement sans incidence sur la viscosité à plus haut taux de cisaillement sont par exemple décrites dans le document WO 99/10421 A1. Elles consistent à réticuler le polymère par réaction radicalaire ou à le modifier avec un agent de couplage polyfonctionnel capable de s'insérer dans des liaisons C-H. Le greffage de fonction associative sur un polymère est aussi une solution décrite dans la demande de brevet WO 2008099125 A1 pour améliorer les propriétés rhéologiques d'un polymère.

Les Demanderesses ont découvert qu'il était possible d'améliorer les propriétés rhéologiques des copolymères statistiques à base d'éthylène et de 1,3-diène et riches en unités éthylène sans modifier leurs propriétés mécaniques et dynamiques ou thermiques.

Ainsi, un premier objet de l'invention est un polymère tribloc de formule B-A-B dans laquelle le symbole A représente un bloc dit central qui est un copolymère statistique comprenant des unités d'un 1,3-diène et plus de 50% en mole d'unités éthylène, et les symboles B représentent chacun un bloc dit terminal qui est un polyéthylène de température de fusion supérieure à 90°C et de masse molaire moyenne en nombre supérieure ou égale à 2 000 g/mol et inférieure ou égale à 10 000 g/mol, le taux des unités éthylène dans le bloc central étant exprimé en pourcentage molaire par rapport au nombre de moles d'unités monomères constituant le bloc central.

Un deuxième objet de l'invention est une composition qui comprend un polymère tribloc conforme à l'invention et un autre composant.

Un troisième objet de l'invention est un procédé de synthèse d'un polymère tribloc conforme à l'invention.

### Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Par l'expression « à base de » utilisée pour définir les constituants d'un système catalytique ou d'une composition, on entend le mélange de ces constituants, ou le produit de la réaction d'une partie ou de la totalité de ces constituants entre eux.

Sauf indication contraire, les taux des unités résultant de l'insertion d'un monomère dans un polymère sont exprimés en pourcentage molaire par rapport à la totalité des unités monomères qui constituent le polymère.

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Le polymère conforme à l'invention est un tribloc de formule B-A-B. A dit bloc central représente un bloc qui est un copolymère statistique contenant des unités éthylène et des unités d'un 1,3-diène, ce qui traduit que les unités monomères constitutives du bloc central sont réparties de façon statistique dans le bloc central, en raison d'une incorporation statistique des monomères dans la chaîne polymère en croissance. Les deux autres blocs représentés par B sont chacun un homopolymère, un polyéthylène.

De manière connue, on entend par unité éthylène une unité qui a pour motif -(CH₂-CH₂)-. Les unités éthylène présentes dans le bloc A dit bloc central représente plus de 50% en moles des unités qui constituent le bloc central. Dans la présente demande, le taux des unités éthylène dans le bloc central, à savoir le nombre de moles d'unités éthylène dans le bloc central, est exprimé en pourcentage molaire par rapport au nombre de moles d'unités monomères constituant le bloc central.

Selon l'un quelconque des modes de réalisation de l'invention, le bloc central est de préférence un copolymère statistique d'éthylène et du 1,3-diène, auquel cas les unités monomères du bloc central sont celles résultant de la copolymérisation de l'éthylène et du 1,3-diène et sont réparties de façon statistique dans le bloc central.

Selon l'invention, le 1,3-diène dont les unités monomères sont constitutives du bloc central est un seul composé, c'est-à-dire un seul (en anglais « one ») 1,3-diène ou est un mélange de 1,3-diènes qui se différencient les uns des autres par la structure chimique. Le 1,3-diène est de préférence le 1,3-butadiène ou l'isoprène ou bien un mélange de 1,3-diènes dont un est le 1,3-butadiène. Le 1,3-diène est de manière plus préférentielle le 1,3-butadiène. De manière très préférentielle, le bloc central est un copolymère statistique d'éthylène et de 1,3-butadiène.

De manière connue, un 1,3-diène peut s'insérer dans une chaîne polymère en croissance par une insertion 1,4 ou 2,1 ou encore 3,4 dans le cas de diène substitué comme l'isoprène pour donner lieu respectivement à la formation d'unité du 1,3-diène de configuration 1,4, d'unité du 1,3-diène de configuration 1,2 ou de configuration 3,4. De préférence, les unités du 1,3-diène sous la configuration 1,2 et les unités du 1,3-diène sous la configuration 3,4 représentent plus de 50% en mole des unités du 1,3-diène.

Selon un mode de réalisation de l'invention, le bloc central contient des unités du 1,3-diène de configuration 1,4, de préférence 1,4-trans. De préférence, les unités du 1,3-diène de configuration 1,4-trans représentent plus de 50% en mole des unités du 1,3-diène de configuration 1,4. De manière plus préférentielle, les unités du 1,3-diène de configuration 1,4-trans représentent 100% en mole des unités du 1,3-diène de configuration 1,4.

Selon un mode de réalisation particulièrement préférentiel de l'invention, le bloc central contient des unités du 1,3-diène qui sont à plus de 50% en mole des unités de configuration 1,2 ou 3,4, le complément à 100% des unités du 1,3-diène étant des unités de configuration 1,4-trans.

Selon un autre mode de réalisation particulièrement préférentiel de l'invention, en particulier lorsque le 1,3-diène est le 1,3-butadiène ou un mélange de 1,3-diènes dont un est le 1,3-butadiène, le bloc central contient en outre des unités de motif 1,2-cyclohexanediyle ou des unités de motif 1,4-cyclohexanediyle, de préférence des unités de motif 1,2-cyclohexanediyle. La présence de ces structures cycliques dans le bloc central résulte d'une insertion très particulière de l'éthylène et de 1,3-butadiène lors de leur copolymérisation. Le mécanisme d'obtention d'une telle microstructure est par exemple décrit dans le document Macromolecules 2009, 42, 3774-3779. La teneur en unités de motif 1,2-cyclohexanediyle et en unités de motif 1,4-cyclohexanediyle dans le bloc central varie selon les teneurs respectives en éthylène et en 1,3-butadiène dans le bloc central. Le bloc central contient généralement moins de 10% en mole d'unité de motif 1,2-cyclohexanediyle et d'unités de motif 1,4-cyclohexanediyle pour les taux les plus élevés en éthylène dans le bloc central et peut en contenir plus de 10% pour les taux les plus faibles en éthylène dans le bloc central, par exemple jusqu'à 15%, pourcentage par rapport au nombre de moles d'unités monomères constituant le bloc central. Le motif 1,2-cyclohexanediyle correspond à la formule suivante.

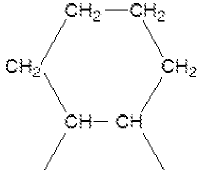

Comme la rigidité du polymère tribloc augmente avec le taux d'unités éthylène dans le bloc central, un polymère tribloc avec un taux d'unités éthylène particulièrement élevé dans le bloc central peut être recherché pour des applications où une forte rigidité du matériau est requise. De préférence, les unités éthylène dans le bloc central représentent plus de 60% en mole des unités qui constituent le bloc central, auquel cas le bloc central contient plus de 60% en mole d'unités éthylène. De manière plus préférentielle, les unités éthylène dans le bloc central représentent au moins 70% en mole des unités qui constituent le bloc central, auquel cas le bloc central contient au moins 70% en mole d'unités éthylène.

Selon un mode de réalisation particulier de l'invention, les unités éthylène dans le bloc central représentent au plus 90% en mole des unités qui constituent le bloc central, auquel cas le bloc central contient au plus 90% en moles d'unités éthylène.

Selon un autre mode de réalisation particulier de l'invention, les unités éthylène dans le bloc central représentent au plus 85% en mole des unités qui constituent le bloc central, auquel cas le bloc central contient au plus 85% en moles d'unités éthylène.

Le bloc central a de préférence une température de transition vitreuse comprise entre -90°C et -20°C. De manière plus préférentielle, la température de transition vitreuse du bloc central est comprise entre -60°C et -20°C, avantageusement entre -50°C et -30°C.

Le bloc central a de préférence une masse molaire moyenne en nombre supérieure ou égale à 3 000 g/mol et inférieure ou égale à 80 000 g/mol.

Les blocs B dits terminaux ont pour caractéristique essentielle d'être chacun un polyéthylène de masse molaire moyenne en nombre supérieure ou égale à 2 000 g/mol et inférieure ou égale à 10 000 g/mol. Les blocs terminaux ont aussi pour autre caractéristique essentielle de présenter un point de fusion supérieure à 90°C, de préférence supérieure à 90°C et inférieure à 140°C. De préférence, B représente un polyéthylène linéaire.

Le tribloc conforme à l'invention peut être préparé selon un procédé, qui comprend la copolymérisation statistique d'un mélange monomère contenant de l'éthylène et le 1,3-diène, puis la polymérisation subséquente d'éthylène.

Le système catalytique utilisé dans le procédé de synthèse du polymère bloc est avantageusement un système catalytique à base au moins d'un métallocène de formule (I) et d'un organomagnésien

P(Cp¹Cp²)Nd(BH₄)_{(1+y)}Li_{y}(THF)ₓ (I)

Cp¹ et Cp², identiques ou différents, étant choisis dans le groupe constitué par les groupes cyclopentadiényles et les groupes fluorényles, les groupes pouvant être substitués ou non, P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle,
y, nombre entier, étant égal ou supérieur à 0,
x, nombre entier ou non, étant égal ou supérieur à 0.

Dans la formule (I), l'atome de néodyme est relié à une molécule de ligand constitué des deux groupes Cp¹ et Cp² reliés entre eux par le pont P. De préférence, le symbole P, désigné sous le terme de pont, répond à la formule ZR¹R², Z représentant un atome de silicium, R¹ et R², identiques ou différents, représentant un groupe alkyle comprenant de 1 à 20 atomes de carbone. De manière plus préférentielle, le pont P est de formule SiR¹R², R¹ et R², étant identiques et tels que définis précédemment. De manière encore plus préférentielle, P répond à la formule SiMe₂.

A titre de groupes cyclopentadiényles et fluorényles substitués, on peut citer ceux substitués par des radicaux alkyles ayant 1 à 6 atomes de carbone ou par des radicaux aryles ayant 6 à 12 atomes de carbone ou encore par des radicaux trialkylsilyles tels que SiMe₃. Le choix des radicaux est aussi orienté par l'accessibilité aux molécules correspondantes que sont les cyclopentadiènes et les fluorènes substitués, parce que ces derniers sont disponibles commercialement ou facilement synthétisables.

A titre de groupes cyclopentadiényles substitués, on peut citer ceux substitués aussi bien en position 2 (ou 5) qu'en position 3 (ou 4), particulièrement ceux substitués en position 2, plus particulièrement le groupe tétraméthylcyclopentadiènyle. Dans la présente demande, dans le cas du groupe cyclopentadiényle, la position 2 (ou 5) désigne la position de l'atome de carbone qui est adjacent à l'atome de carbone auquel est attaché le pont P, comme cela est représenté dans le schéma ci-après.

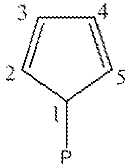

A titre de groupes fluorényles substitués, on peut citer ceux substitués en position 2,7, 3 ou 6, particulièrement les groupes 2,7-ditertiobutyle-fluorényle et 3,6-ditertiobutyle-fluorényle. Les positions 2, 3, 6 et 7 désignent respectivement la position des atomes de carbone des cycles comme cela est représenté dans le schéma ci-après, la position 9 correspondant à l'atome de carbone auquel est attaché le pont P.

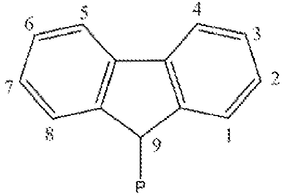

De préférence, Cp¹ et Cp² sont identiques et sont choisis dans le groupe constitué par les groupes fluorényles substitués et le groupe fluorényle. Avantageusement, dans la formule (I) Cp¹ et Cp² représentent chacun un groupe fluorényle substitué ou un groupe fluorényle, de préférence un groupe fluorényle. Le groupe fluorényle est de formule C₁₃H₈. De préférence, le métallocène est de formule (Ia), (Ib), (Ic), (Id) ou (Ie) dans lesquelles le symbole Flu présente le groupe fluorényle de formule C₁₃H₈.

[{Me₂SiFlu₂Nd(µ-BH₄)₂Li(THF)}₂] (Ia)

[Me₂SiFlu₂Nd(µ-BH₄)₂Li(THF)] (Ib)

[Me₂SiFlu₂Nd(µ-BH₄)(THF)] (Ic)

[{Me₂SiFlu₂Nd(µ-BH₄)(THF)₂] (Id)

[Me₂SiFlu₂Nd(µ-BH₄)] (Ie)

L'organomagnésien utilisé dans le système catalytique à titre de co-catalyseur est un composé organomagnésien de formule (II) ou de formule (III),

R^{B}-(Mg-R^{A})ₘ-Mg-R^{B} (II)

X-Mg-R^{C}-Mg-X (III)

R^{A} étant une chaîne divalente hydrocarbonée aliphatique, interrompue ou non par un ou plusieurs atomes d'oxygène ou de soufre ou bien par un ou plusieurs groupes arylènes,
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{C} étant une chaîne divalente hydrocarbonée aliphatique, interrompue ou non par un ou plusieurs atomes d'oxygène ou de soufre ou bien par un ou plusieurs groupes arylènes,
X étant un atome d'halogène,
m étant un nombre supérieur ou égal à 1, de préférence égal à 1.

Les co-catalyseurs de formule (II) et (III) ont tous les deux la particularité de comporter des liaisons magnésium-carbone impliquant des atomes de magnésium distincts. Dans la formule (II), deux atomes de magnésium partagent chacun une première liaison avec un premier atome de carbone appartenant à R^{B} et une deuxième liaison avec un deuxième atome de carbone appartenant à R^{A.} Le premier atome de carbone est constitutif du noyau benzénique de R^{B}. Le deuxième atome de carbone est constitutif de la chaîne hydrocarbonée aliphatique R^{A} qui peut contenir au sein de sa chaîne un ou plusieurs hétéroatomes choisis parmi l'oxygène et le soufre ou bien un ou plusieurs groupes arylènes. Dans le cas préférentiel où m est égal à 1, chaque atome de magnésium partage donc une première liaison avec un premier atome de carbone de R^{B} et une deuxième liaison avec un deuxième atome de carbone de R^{A}. Dans la formule (III), chaque atome de magnésium partage donc une première liaison avec un atome d'halogène et une deuxième liaison avec un atome de carbone de R^{C}

Dans la formule (II), R^{B} a pour caractéristique de comprendre un noyau benzénique substitué par l'atome de magnésium. Les deux atomes de carbone du noyau benzénique de R^{B} en ortho du magnésium portent un substituant, identique ou différent. Alternativement l'un des deux atomes de carbone du noyau benzénique de R^{B} en ortho du magnésium peut porter un substituant, l'autre atome de carbone du noyau benzénique de R^{B} en ortho du magnésium peut former un cycle. Le substituant est un méthyle, un éthyle ou un isopropyle. Dans le cas où l'un des 2 atomes de carbone du noyau benzénique de R^{B} en ortho du magnésium est substitué par un isopropyle, de préférence le deuxième atome de carbone du noyau benzénique de R^{B} en ortho du magnésium n'est pas substitué par un isopropyle. De préférence, les atomes de carbone du noyau benzénique de R^{B} en ortho du magnésium sont substitués par un méthyle ou un éthyle. De manière plus préférentielle, les atomes de carbone du noyau benzénique de R^{B} en ortho du magnésium sont substitués par un méthyle.

Le composé organomagnésien de formule (II) répond préférentiellement à la formule (Ila-m) dans laquelle m est supérieur ou égal à 1, R₁ et R₅, identiques ou différents, représentent un méthyle ou un éthyle, de préférence un méthyle, R₂, R₃ et R₄, identiques ou différents, représentent un atome d'hydrogène ou un alkyle et R^{A} est une chaîne divalente hydrocarbonée aliphatique, interrompue ou non par un ou plusieurs atomes d'oxygène ou de soufre ou bien par un ou plusieurs groupes arylènes. De préférence, R₁ et R₅ représentent un méthyle. De préférence, R₂ et R₄ représentent un atome hydrogène.

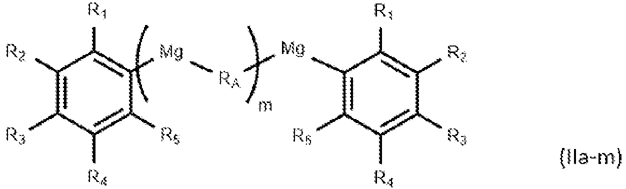

Le composé organomagnésien de formule (Ila-m) est de formule (IIa-1) dans le cas où m est égal à 1.

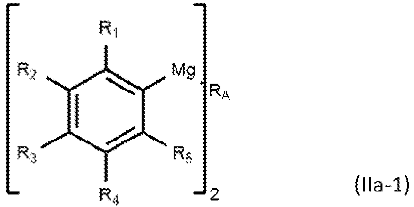

Selon une variante préférentielle, R₁, R₃ et R₅ sont identiques dans la formule (Ila-m), notamment dans la formule (IIa-1). Selon une variante plus préférentielle, R₂ et R₄ représentent un hydrogène et R₁, R₃ et R₅ sont identiques. Dans une variante davantage préférentielle, R₂ et R₄ représentent un hydrogène et R₁, R₃ et R₅ représentent un méthyle.

Dans les formules (II) et (IIa-m), en particulier dans la formule (IIa-1), R^{A} est une chaîne hydrocarbonée aliphatique divalente qui peut contenir au sein de sa chaîne un ou plusieurs hétéroatomes choisis parmi l'oxygène et le soufre ou bien un ou plusieurs groupes arylènes. De préférence, R^{A} est un alcanediyle, ramifiée ou linéaire, un cycloalcanediyle ou un radical xylènediyle. De manière plus préférentielle, R^{A} est un alcanediyle.

De préférence, R^{A} contient 3 à 10 atomes de carbone, en particulier 3 à 8 atomes de carbone.

De manière encore plus préférentielle, R^{A} est un alcanediyle ayant 3 à 10 atomes de carbone. Avantageusement, R^{A} est un alcanediyle ayant 3 à 8 atomes de carbone. Très avantageusement, R^{A} est un alcanediyle linéaire. Comme groupes R^{A} conviennent tout particulièrement le 1,3-propanediyle, le 1,4-butanediyle, le 1,5-pentanediyle, le 1,6-hexanediyle, le 1,7-heptanediyle, le 1,8-octanediyle.

Selon l'un quelconque des modes de réalisation de l'invention, m est préférentiellement égal à 1 dans la formule (II), en particulier dans la formule (Ila-m).

Le composé organomagnésien de formule (II) peut être préparé par un procédé, qui comprend la réaction d'un premier organomagnésien de formule X'Mg-R^{A}-MgX' avec un deuxième organomagnésien de formule R^{B}-Mg-X', X' représentant un atome d'halogène, préférentiellement de brome ou de chlore, R^{B} et R^{A} étant tels que définis précédemment. X' est plus préférentiellement un atome de brome. La stœchiométrie utilisée dans la réaction détermine la valeur de m dans la formule (II) et dans la formule (Ila-m). Par exemple un ratio molaire de 0.5 entre la quantité du premier organomagnésien et la quantité du deuxième organomagnésien est favorable à la formation d'un composé organomagnésien de formule (II) dans laquelle m est égal à 1, alors qu'un ratio molaire supérieur à 0.5 sera davantage favorable à la formation d'un composé organomagnésien de formule (II) dans laquelle m est supérieur à 1.

Pour mettre en œuvre la réaction du premier organomagnésien avec le deuxième organomagnésien, on ajoute typiquement une solution du deuxième organomagnésien sur une solution du premier organomagnésien. Les solutions du premier organomagnésien et du deuxième organomagnésien sont généralement des solutions dans un éther, tel que le diéthyléther, le dibutyléther, le tétrahydrofurane, le méthyltétrahydrofurane ou le mélange de deux ou plus de ces éthers. De préférence, les concentrations respectives des solutions du premier organomagnésien et du deuxième organomagnésien sont respectivement de 0,01 à 3 mol/L et de 0,02 à 5 mol/L. De manière plus préférentielle, les concentrations respectives du premier organomagnésien et du deuxième organomagnésien sont respectivement de 0,1 à 2 mol/L et de 0,2 à 4 mol/L.

Le premier organomagnésien et le deuxième organomagnésien peuvent être préparés au préalable par une réaction de Grignard à partir de magnésium métal et d'un précurseur adéquat. Pour le premier organomagnésien et le deuxième organomagnésien, les précurseurs respectifs sont de formule X'-R^{A}-X' et R^{B}-X', R^{A}, R^{B} et X' étant tels que définis précédemment. La réaction de Grignard est mise en œuvre typiquement par l'ajout du précurseur à du magnésium métal qui se présente généralement sous la forme de copeaux. De préférence, de l'iode (I₂) typiquement sous la forme de bille est introduit dans le réacteur avant l'ajout du précurseur afin d'activer la réaction de Grignard de manière connue.

Alternativement, le composé organomagnésien conforme à l'invention peut être préparé par réaction d'un composé organométallique de formule M-R^{A}-M et de l'organomagnésien de formule R^{B}-Mg-X', M représentant un atome de lithium, de sodium ou de potassium, X', R^{B} et R^{A} étant tels que définis précédemment. De préférence, M représente un atome de lithium, auquel cas l'organométallique de formule M-R^{A}-M est un organolithien.

La réaction de l'organolithien et de l'organomagnésien est conduite typiquement dans un éther tel que le diéthyléther, le dibutyléther, le tétrahydrofurane, le méthyltétrahydrofurane. La réaction est conduite aussi typiquement à une température allant de 0°C à 60°C. La mise en contact est réalisée de préférence à une température comprise entre 0°C et 23°C. La mise en contact du composé organométallique de formule M-R^{A}-M avec l'organomagnésien de formule R^{B}-Mg-X' se fait préférentiellement par l'ajout d'une solution du composé organométallique M-R^{A}-M à une solution de l'organomagnésien R^{B}-Mg-X'. La solution du composé organométallique M-R^{A}-M est généralement une solution dans un solvant hydrocarboné, de préférence n-hexane, cyclohexane ou méthylcyclohexane. La solution de l'organomagnésien R^{B}-Mg-X' est généralement une solution dans un éther, de préférence le diéthyléther ou le dibutyléther. De préférence, les concentrations respectives des solutions du composé organométallique et de l'organomagnésien M-R^{A}-M et R^{B}-Mg-X' sont respectivement de 0,01 à 1 mol/L et de 0,02 à 5 mol/L. De manière plus préférentielle, les concentrations respectives des solutions du composé organométallique et de l'organomagnésien M-R^{A}-M et R^{B}-Mg-X' sont respectivement de 0,05 à 0,5 mol/L et de 0,2 à 3 mol/L.

Comme toute synthèse faite en présence de composés organométalliques, les synthèses décrites pour la synthèse des organomagnésiens ont lieu dans des conditions anhydres sous atmosphère inerte, dans des réacteurs agités. Typiquement, les solvants et les solutions sont utilisés sous azote ou argon anhydre.

Une fois que le composé organomagnésien de formule (II) est formé, il est récupéré généralement en solution après filtration conduite sous atmosphère inerte et anhydre. Il peut être stocké avant son utilisation dans sa solution dans des récipients hermétiques, par exemple des bouteilles capsulées, à une température comprise entre -25°C et 23°C.

Comme tout composé organomagnésien, le composé organomagnésien de formule (II) peut se présenter sous la forme d'une entité monomère (R^{B}-(Mg-R^{A})ₘ-Mg-R^{B})₁ ou sous la forme d'une entité polymère (R^{B}-(Mg-R^{A})ₘ-Mg-R^{B})ₚ, p étant un nombre entier supérieur à 1, notamment dimère (R^{B}-(Mg-R^{A})ₘ-Mg-R^{B})₂, m étant comme défini précédemment. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Dans la formule (III), R^{C} est une chaîne hydrocarbonée aliphatique divalente qui peut contenir au sein de sa chaîne un ou plusieurs hétéroatomes choisis parmi l'oxygène et le soufre ou bien un ou plusieurs groupes arylènes. De préférence, R^{C} est un alcanediyle, ramifiée ou linéaire, un cycloalcanediyle ou un radical xylènediyle. De manière plus préférentielle, R^{C} est un alcanediyle.

De préférence, R^{C} contient 3 à 10 atomes de carbone, en particulier 3 à 8 atomes de carbone.

De manière encore plus préférentielle, R^{C} est un alcanediyle ayant 3 à 10 atomes de carbone. Avantageusement, R^{C} est un alcanediyle ayant 3 à 8 atomes de carbone. Très avantageusement, R^{C} est un alcanediyle linéaire. Comme groupes R^{C} conviennent tout particulièrement le 1,3-propanediyle, le 1,4-butanediyle, le 1,5-pentanediyle, le 1,6-hexanediyle, le 1,7-heptanediyle, le 1,8-octanediyle.

Les composés de formule (III) sont des composés bien connus comme réactifs de Grignard. En revanche, ils ne sont pas connus pour être utilisés comme co-catalyseur dans un système catalytique utilisable dans la préparation de polymères triblocs. Des réactifs de Grignards de formule (III) sont décrits par exemple dans l'ouvrage « Advanced Organic Chemistry » de J. March, 4th Edition, 1992, page 622-623 ou dans l'ouvrage « Handbook of Grignard Reagents », Edition Gary S. Silverman, Philip E. Rakita, 1996, page 502-503. Ils peuvent être synthétisés par la mise en contact de magnésium métal avec un composé dihalogéné de formule X-R^{C}-X, R^{C} étant tel que défini selon l'invention. Pour leur synthèse, on peut par exemple se référer à la collection de volumes de « Organic Synthesis ».

Comme tout composé organomagnésien, le composé organomagnésien de formule (III) peut se présenter sous la forme d'une entité monomère (X-Mg-R^{C}-Mg-X), ou sous la forme d'une entité polymère (X-Mg-R^{C}-Mg-X)ₚ, p étant un nombre entier supérieur à 1, notamment dimère (X-Mg-R^{C}-Mg-X)₂. Par ailleurs, qu'il soit sous la forme d'une entité monomère ou polymère, il peut également se présenter sous la forme d'une entité coordinée à une ou plusieurs molécules d'un solvant, de préférence d'un éther tel que le diéthyléther, le tétrahydrofurane ou le méthyltétrahydrofurane.

Le système catalytique peut être préparé de façon traditionnelle par un procédé analogue à celui décrit dans la demande de brevet WO 2007054224 ou WO 2007054223. Par exemple, on fait réagir dans un solvant hydrocarboné l'organomagnésien et le métallocène typiquement à une température allant de 20 à 80°C pendant une durée comprise entre 5 et 60 minutes. Le système catalytique est généralement préparé dans un solvant hydrocarboné, aliphatique comme le méthylcyclohexane ou aromatique comme le toluène.

Le métallocène utilisé pour préparer le système catalytique peut se trouver sous la forme de poudre cristallisée ou non, ou encore sous la forme de monocristaux. Le métallocène peut se présenter sous une forme monomère ou dimère, ces formes dépendant du mode de préparation du métallocène, comme par exemple cela est décrit dans la demande de brevet WO 2007054224 ou WO 2007054223. Le métallocène peut être préparé de façon traditionnelle par un procédé analogue à celui décrit dans la demande de brevet WO 2007054224 ou WO 2007054223, notamment par réaction dans des conditions inertes et anhydres du sel d'un métal alcalin du ligand avec un borohydrure de terre rare, en l'espèce de néodyme, dans un solvant adapté, tel un éther, comme le diéthyléther ou le tétrahydrofurane ou tout autre solvant connu de l'homme de l'art. Après réaction, le métallocène est séparé des sous-produits de réaction par les techniques connues de l'homme de l'art, telles que la filtration ou la précipitation dans un second solvant. Le métallocène est au final séché et isolé sous forme solide.

Comme toute synthèse faite en présence de composé organométallique, la synthèse du métallocène et celle du système catalytique ont lieu dans des conditions anhydres sous atmosphère inerte. Typiquement, les réactions sont conduites à partir de solvants et de composés anhydres sous azote ou argon anhydre.

Le système catalytique est généralement introduit dans le réacteur contenant le solvant de polymérisation et les monomères. Pour atteindre la macrostructure souhaitée du polymère tribloc, l'homme du métier adapte les conditions de polymérisation, notamment le rapport molaire de l'organomagnésien sur le métal Nd constituant le métallocène. Les quantités de co-catalyseur et de métallocène mises en réaction sont telles que le rapport entre le nombre de mole de Mg du co-catalyseur et le nombre de mole de métal de terre rare du métallocène va de préférence de 1 à 200, de manière plus préférentielle de 1 à moins de 20. La plage de valeurs allant de 1 à moins de 20 est notamment plus favorable pour l'obtention de polymères de masses molaires élevées. Le système catalytique est généralement préparé dans un solvant hydrocarboné, aliphatique comme le méthylcyclohexane ou aromatique comme le toluène. Généralement après sa synthèse, le système catalytique est utilisé en l'état dans le procédé de synthèse du polymère conforme à l'invention.

L'homme du métier adapte aussi les conditions de polymérisation et les concentrations en chacun des réactifs (constituants du système catalytique, monomères) selon le matériel (outils, réacteurs) utilisé pour conduire la polymérisation et les différentes réactions chimiques. Comme cela est connu de l'homme du métier, la polymérisation ainsi que la manipulation des monomères, du système catalytique et du ou des solvants de polymérisation se font dans des conditions anhydres et sous atmosphère inerte. Les solvants de polymérisation sont typiquement des solvants hydrocarbonés, aliphatiques ou aromatiques.

La polymérisation est conduite de préférence en solution, en continu ou discontinu, dans un réacteur avantageusement agité. Le solvant de polymérisation peut être un solvant hydrocarboné, aromatique ou aliphatique. A titre d'exemple de solvant de polymérisation, on peut citer le toluène et le méthylcyclohexane. Avantageusement, la polymérisation est conduite en solution dans un solvant hydrocarboné.

La préparation du bloc central est réalisée par la copolymérisation du mélange contenant l'éthylène et le 1,3-diène. La température de polymérisation varie généralement dans un domaine allant de 30 à 160°C, préférentiellement de 30 à 120°C. Pendant la préparation du bloc central, la température du milieu réactionnel est avantageusement maintenue constante au cours de la copolymérisation et la pression totale du réacteur est aussi avantageusement maintenue constante. La préparation du bloc central s'achève en coupant l'alimentation en monomères, notamment par une chute de la pression du réacteur, de préférence jusqu'à environ 3 bars.

La préparation des blocs terminaux par la polymérisation subséquente de l'éthylène se poursuit par application d'une pression d'éthylène dans le réacteur, la pression en éthylène étant maintenue constante jusqu'à la consommation désirée d'éthylène pour atteindre la masse molaire moyenne en nombre souhaitée du bloc terminal. La température de polymérisation de l'éthylène est conduite de préférence à une température identique à celle de la préparation du bloc central. La température de polymérisation pour la préparation des blocs terminaux varie généralement dans un domaine allant de 30 à 160°C, préférentiellement de 30 à 120°C. La pression pour la préparation des blocs terminaux varie généralement dans un domaine allant de 1 bar à 150 bars et préférentiellement de 1 bar à 10 bars. La synthèse des blocs terminaux s'achève quand les blocs terminaux atteignent la masse molaire moyenne en nombre souhaitée.

La polymérisation peut être stoppée par refroidissement du milieu de polymérisation ou par ajout d'un alcool, préférentiellement un alcool contenant 1 à 3 atomes de carbone, par exemple l'éthanol. Le polymère tribloc peut être récupéré selon les techniques classiques connues de l'homme du métier comme par exemple par précipitation, par évaporation du solvant sous pression réduite ou par entraînement dit « stripping » à la vapeur d'eau.

Le polymère tribloc conforme à l'invention présente une rhéologie améliorée par rapport à un copolymère statistique de même microstructure et de même macrostructure que le bloc central du polymère tribloc. L'amélioration de la rhéologie se manifeste par une forte augmentation de la viscosité du polymère aux faibles taux de cisaillement (typiquement inférieurs à 10 rad/s), tout en ayant un faible impact sur la viscosité aux taux élevés de cisaillement (typiquement supérieurs à 50 rad/s). L'amélioration de la rhéologie permet de maîtriser davantage l'écoulement du polymère au cours des opérations qui sollicitent le polymère à faible taux de cisaillement comme l'extrusion à chaud. Ce résultat est d'autant plus surprenant qu'il est obtenu sans modification de la macrostructure du polymère, ni de la propriété thermique qu'est la température de transition vitreuse. En effet, le tribloc reste une chaîne linéaire comme le copolymère statistique de même microstructure que le bloc central et il conserve la valeur de température de transition vitreuse de ce même copolymère statistique. De préférence, le polymère tribloc conforme à l'invention est un élastomère.

Le polymère tribloc conforme à l'invention peut être utilisé dans une composition, autre objet de l'invention, qui comprend en outre un autre composant. L'autre composant peut être une charge comme un noir de carbone ou une silice, un plastifiant comme une huile, un agent de réticulation comme le soufre ou un peroxyde, un agent antioxydant. L'autre composant peut être aussi un polymère, notamment un élastomère. La composition peut être une composition de caoutchouc. Les caractéristiques précitées de la présente invention, ainsi que d'autres, seront mieux comprises à la lecture de la description suivante de plusieurs exemples de réalisation de l'invention, donnés à titre illustratif et non limitatif.

### Exemple :

**Chromatographie d'exclusion stérique haute température (SEC HT).** Les analyses de Chromatographie d'exclusion stérique à haute température (HT-SEC) ont été réalisées avec un appareil Viscotek (Malvern Instruments) équipé de 3 colonnes (PLgel Olexis 300 mm × 7 mm I. D. de Agilent Technologies) et de 3 détecteurs (réfractomètre et viscosimètre différentiels, et diffusion de la lumière). 200 µL d'une solution de l'échantillon à une concentration de 3 mg mL⁻¹ ont été élués dans le 1,2,4-trichlorobenzène en utilisant un débit de 1 mL min⁻¹ à 150 °C. La phase mobile a été stabilisée par du 2,6-di(tert-butyl)-4-méthylphénol (400 mg L⁻¹). Le logiciel OmniSEC a été utilisé pour l'acquisition et l'analyse des données. Les masses molaires moyenne en nombre (Mn) et en masse (Mw) des copolymères d'éthylène et de butadiène synthétisés sont calculées en utilisant une courbe de calibration universelle étalonnée à partir de polystyrènes standards (Masses molaires au pic *M*ₚ : 672 à 12 000 000 g mol⁻¹) de Polymer Standard Service (Mainz) en utilisant les détecteurs réfractomètre et viscosimètre. La dispersité *Ð* (*Ð* = Mw/Mn) est également calculée.

**Résonance magnétique nucléaire (RMN).** La spectroscopie RMN ¹H haute résolution des copolymères a été effectuée sur un spectromètre Bruker 400 Avance III opérant à 400 MHz équipé d'une sonde BBFO 5 mm. Les acquisitions sont faites à 363 K. Un mélange de tétrachloroéthylène (TCE) et benzène deutéré (C₆D₆) (2/1 v/v) a été utilisé comme solvant. Les échantillons ont été analysés à une concentration de 17 g L⁻¹. Les déplacements chimiques sont donnés en ppm, relativement au signal proton du benzène deutéré fixé à 7,16 ppm. Le nombre d'acquisitions est fixé à 512.

**Calorimétrie différentielle à balayage (DSC).** Les analyses sont effectuées sur un appareil DSC 3⁺ (Mettler Toledo) suivant une méthode dynamique comportant 9 paliers de température : Palier 1 : 20 à 180 °C (10 °C min⁻¹), Palier 2 : isotherme 180 °C (5 min), Palier 3 : 180 à -80 °C (-10 °C min⁻¹), Palier 4 : isotherme -80 °C (5 min), Palier 5 : -80 à 180 °C (10 °C min⁻¹), Palier 6 : isotherme 180 °C (5 min), Palier 7 : 180 à -80 °C (10 °C min⁻¹), Palier 8 : isotherme -80 °C (5 min), Palier 9 : -80 à 180 °C (10 °C min⁻¹). Les deux premières montées permettent d'effacer le passé thermique de l'échantillon. Les mesures de la température de transition vitreuse et de fusion se font sur le 9^{ème} palier. Le 7^{ème} palier est également conservé pour obtenir des informations sur la cristallisation de l'échantillon.

**Analyse rhéologique.** Les analyses sont effectuées sur un rhéomètre rotationnel MARS 60 (Thermo Scientific) équipé d'un ensemble plan inférieur / four supérieur Peltier muni de géométries plan-plan 8 mm. Les échantillons en poudre sont pressés sous forme de disques à 150 °C (épaisseur 1 à 1,5 mm) pendant 5 min, puis découpés avec un emporte-pièce sous forme de disques de diamètre 8 mm. Ils sont mis en place dans le rhéomètre à 150 °C.

Exemple 1 : Préparation d'un co-catalyseur, le 1,5-di(bromure de magnésium)-pentanediyle (DBMP) 1,25 g (50 mmol, 10 équivalents) de magnésium sont inertés dans un ballon de 50 mL muni d'une olive aimantée et surmonté d'une ampoule de coulée de 10 mL. Une bille de diiode (10 mg) est introduite sur le magnésium. 11 mL de MeTHF distillé sur sodium/benzophénone sont introduits dans le ballon sous agitation et 9 mL sont introduits dans l'ampoule de coulée. 0,68 mL de 1,5-dibromopentane (5 mmol, 1 équivalent) dégazé et séché sur tamis moléculaire activé sont introduits dans l'ampoule de coulée. La solution d'halogénoalcane est coulée au goutte à goutte sur le magnésium pendant 1 h. L'agitation est maintenue 12 h à 20 °C. Cette solution est concentrée sous vide puis diluée dans 10 mL de toluène. La concentration en groupement pentanediyle est estimée à 0,45 mol L⁻¹.

¹H NMR (C₆D₆ - 400 MHz - 298 K) δ : ppm = 2,06 (quin, J = 7,6 Hz, « b »), 1,80 (quin, J = 7,4 Hz, « c »), -0,05 (t, J = 7,7 Hz, « a ») ; quin pour quintuplet.

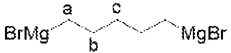

Exemple 2 : Préparation d'un copolymère statistique d'éthylène et de 1,3-butadiène de référence 200 mL de toluène (Biosolve) purifié sur un système SPS800 MBraun sont introduits dans un ballon inerté de 250 mL équipé d'une olive aimantée. 0,31 mL (0,14 mmol) d'une solution de 1,5-di(bromure de magnésium)pentanediyle (DBMP 0,45 mol L⁻¹) préparé selon l'exemple 1 sont introduits dans le ballon sous agitation. 32 mg (50 µmol de néodyme) de {(Me₂Si(C₁₃H₈)₂)Nd(-BH₄)[(-BH₄)Li(THF)]}₂ sont ensuite introduits dans le ballon.

La solution catalytique est transférée à l'aide d'une canule dans un réacteur de 250 mL sous atmosphère inerte à 70 °C. La surpression d'argon dans le réacteur est réduite à 0,5 bar puis le réacteur est pressurisé à 4 bars avec un mélange éthylène / butadiène de ratio 80 / 20 molaire sous une agitation à 1 000 tr min⁻¹. La pression est maintenue constante dans le réacteur à l'aide d'un réservoir contenant le mélange éthylène / butadiène. Après une chute de pression dans le réservoir, équivalente à environ 10 g de monomères pour une Mn visée de 72 000 g mol⁻¹, l'alimentation est arrêtée et le réacteur est dégazé et la température est ramenée à 20 °C. La solution de copolymère est précipitée dans du méthanol sous agitation en présence d'environ 20 mg de 2,2'-Méthylènebis(6-tert-butyl-4-méthylphénol) comme antioxydant. Le copolymère obtenu est séché sous vide à 70 °C pendant 4 h.

Exemple 3 : Préparation d'un polymère tribloc conforme à l'invention, avec un bloc central copolymère statistique d'éthylène et de 1,3-butadiène et des blocs terminaux polyéthylène :
200 mL de toluène (Biosolve) purifié sur un système SPS800 MBraun sont introduits dans un ballon inerté de 250 mL équipé d'une olive aimantée. 0,6 mL (0,25 mmol) d'une solution de 1,5-di(bromure de magnésium)pentanediyle (DBMP 0,45 mol L⁻¹) préparé selon l'exemple 1 sont introduits dans le ballon sous agitation. 16 mg (25 µmol de néodyme) de {(Me₂Si(C₁₃H₈)₂)Nd(-BH₄)[(-BH₄)Li(THF)]}₂ sont ensuite introduits dans le ballon.

Préparation du bloc central (Etape 1) : La solution catalytique est transférée à l'aide d'une canule dans un réacteur de 250 mL sous atmosphère inerte à 70 °C. La surpression d'argon dans le réacteur est réduite à 0,5 bar puis le réacteur est pressurisé à 4 bars avec un mélange éthylène / butadiène de ratio 80 / 20 molaire sous une agitation à 1 000 tr min⁻¹. La pression est maintenue constante dans le réacteur à l'aide d'un réservoir contenant le mélange éthylène / butadiène. Après une chute de pression dans le réservoir équivalente à environ 13 g de monomères, l'alimentation est arrêtée et le réacteur est isolé jusqu'à ce que la pression dans le réacteur atteigne 2,8 bars pour obtenir 15 g de copolymère, soit une Mn visée du bloc central de 60 000 g mol⁻¹.

Préparation des blocs terminaux (Etape 2) : Le réacteur est de nouveau pressurisé à 4 bars à l'aide d'un réservoir contenant de l'éthylène uniquement puis 3 g de monomères environ sont consommés par chute de pression dans le réservoir, soit une Mn visée des blocs terminaux de 6 000 g mol⁻¹ chacun.

Le réacteur est dégazé et la température est ramenée à 20 °C. La solution de copolymère est précipitée dans du méthanol sous agitation en présence d'environ 20 mg de 2,2'-Méthylènebis(6-tert-butyl-4-méthylphénol) comme antioxydant. Le copolymère obtenu est séché sous vide à 70 °C pendant 4 h.

Les caractéristiques des polymères figurent dans le tableau 1. Dans le tableau 1, le taux d'unité éthylène, le taux d'unité du 1,3 butadiène sous la configuration 1,2 (unité 1,2), sous la configuration 1,4 (unité 1,4) et le taux d'unité de motif 1,2-cyclohexanediyle (unité cycle) sont exprimés en pourcentage molaire par rapport à l'ensemble des unités monomères du polymère. Les propriétés rhéologiques figurent dans le tableau 2.

**[Table 1]**

| Ex. | unité éthylène | unité 1,2 | unité 1,4 | unité cycle | Tg (°C) | Tf (°C) | taux (%) cristallinité | *M*ₙ (g/mol) | *Ð* |
|---|---|---|---|---|---|---|---|---|---|
| 2 | 74,4 | 10,0 | 5,9 | 9,7 | -35 | - | - | 61400 | 1,9 |
| 3 | 81,9 | 6,7 | 4,0 | 7,4 | -35 | 122 | 8,9 | 62600 | 2,9 |

**[Table 2]**

| Ex. | G' à 0,1 Hz, à 150°C | G' à 10 Hz, à 150°C |
|---|---|---|
| 2 | 100 | 100 |
| 3 | 285 | 115 |

La comparaison des exemples 2 et 3 montrent que la valeur de G' du tribloc mesurée à des faibles taux de cisaillement, typiquement inférieurs à 10 rad/s, est amplifiée par rapport au polymère de référence. En effet, à 0,1 Hz (soit 0,6 rad/s) elle est près de 3 fois supérieure à celle du G' du polymère de référence. Pour les taux de cisaillement élevés, typiquement supérieurs à 50 rad/s, le facteur multiplicatif est bien moindre, puisqu'il est seulement de 1,1 à 10 Hz (soit 62 rad/s). L'utilisation d'un polymère tribloc selon l'invention en remplacement d'un polymère statistique permet bien une forte augmentation de la viscosité du polymère aux faibles taux de cisaillement, alors que l'impact sur la viscosité est relativement faible aux taux élevés de cisaillement. Cette augmentation de viscosité aux faibles taux de cisaillement permet de limiter les phénomènes d'écoulement du polymère dans les procédés de transformation du polymère aux faibles taux de cisaillement sans modification notable de ses propriétés rhéologiques aux forts taux de cisaillement.

Ces résultats traduisent une amélioration de la rhéologie d'un copolymère statistique d'éthylène et d'un 1,3-diène sans que ne soient modifiées la macrostructure du tribloc par rapport au copolymère statistique et la microstructure de la partie copolymère statistique, ce qui permet de conserver aussi dans le polymère tribloc les propriétés intrinsèques du copolymère statistique.

## Revendications

1. Polymère tribloc de formule B-A-B dans laquelle le symbole A représente un bloc dit central qui est un copolymère statistique comprenant des unités d'un 1,3-diène et plus de 50% en mole d'unités éthylène, et les symboles B représentent chacun un bloc dit terminal qui est un polyéthylène de température de fusion supérieure à 90°C et de masse molaire moyenne en nombre supérieure ou égale à 2 000 g/mol et inférieure ou égale à 10 000 g/mol, le taux des unités éthylène dans le bloc central étant exprimé en pourcentage molaire par rapport au nombre de moles d'unités monomères constituant le bloc central.

2. Polymère tribloc selon la revendication 1 dans lequel le bloc central est un copolymère statistique d'éthylène et du 1,3-diène.

3. Polymère tribloc selon la revendication 1 ou 2 dans lequel le bloc central contient plus de 60% en mole d'unités éthylène, de préférence au moins 70% en mole d'unités éthylène.

4. Polymère tribloc selon l'une quelconque des revendications 1 à 3 dans lequel le bloc central contient au plus 90% en mole d'unités éthylène.

5. Polymère tribloc selon l'une quelconque des revendications 1 à 4 dans lequel le bloc central contient au plus 85% en mole d'unités éthylène.

6. Polymère tribloc selon l'une quelconque des revendications 1 à 5 dans lequel le bloc central a une température de transition vitreuse comprise entre -90°C et -20°C.

7. Polymère tribloc selon l'une quelconque des revendications 1 à 6 dans lequel le bloc central a une masse molaire moyenne en nombre supérieure ou égale à 3 000 g/mol et inférieure ou égale à 80 000 g/mol.

8. Polymère tribloc selon l'une quelconque des revendications 1 à 7 dans lequel le 1,3-diène est le 1,3-butadiène ou l'isoprène ou bien un mélange de 1,3-diènes dont un est le 1,3-butadiène, de préférence le 1,3-butadiène.

9. Polymère tribloc selon l'une quelconque des revendications 1 à 8 dans lequel le 1,3-diène est le 1,3-butadiène ou un mélange de 1,3-diènes dont un est le 1,3-butadiène et le bloc central contient des unités de motif 1,2-cyclohexanediyle ou des unités de motif 1,4-cyclohexanediyle, de préférence des unités de motif 1,2-cyclohexanediyle.

10. Polymère tribloc selon l'une quelconque des revendications 1 à 9, lequel polymère est un élastomère.

11. Composition qui comprend un polymère tribloc selon l'une quelconque des revendications 1 à 10 et un autre composant.

12. Procédé de synthèse d'un polymère tribloc défini à l'une quelconque des revendications 1 à 10 qui comprend la copolymérisation statistique d'un mélange monomère contenant de l'éthylène et un 1,3-diène, puis la polymérisation subséquente d'éthylène en présence d'un système catalytique à base au moins d'un métallocène de formule (I) et d'un organomagnésien de formule (II) ou (III)
P(Cp¹Cp²)Nd(BH₄)_{(1+y)}Li_{y}(THF)ₓ (I)
R^{B}-(Mg-R^{A})ₘ-Mg-R^{B} (II)
X-Mg-R^{C}-Mg-X (III)
Cp¹ et Cp², identiques ou différents, étant choisis dans le groupe constitué par les groupes cyclopentadiényles et les groupes fluorényles, les groupes pouvant être substitués ou non, P étant un groupe pontant les deux groupes Cp¹ et Cp² et représentant un groupe ZR¹R², Z représentant un atome de silicium ou de carbone, R¹ et R², identiques ou différents, représentant chacun un groupe alkyle comprenant de 1 à 20 atomes de carbone, de préférence un méthyle, y, nombre entier, étant égal ou supérieur à 0,
x, nombre entier ou non, étant égal ou supérieur à 0,
R^{A} étant une chaîne divalente hydrocarbonée aliphatique, interrompue ou non par un ou plusieurs atomes d'oxygène ou de soufre ou bien par un ou plusieurs groupes arylènes,
R^{B} comprenant un noyau benzénique substitué par l'atome de magnésium, l'un des atomes de carbone du noyau benzénique en ortho du magnésium étant substitué par un méthyle, un éthyle, un isopropyle ou formant un cycle avec l'atome de carbone qui est son plus proche voisin et qui est en méta du magnésium, l'autre atome de carbone du noyau benzénique en ortho du magnésium étant substitué par un méthyle, un éthyle ou un isopropyle,
R^{C} étant une chaîne divalente hydrocarbonée aliphatique, interrompue ou non par un ou plusieurs atomes d'oxygène ou de soufre ou bien par un ou plusieurs groupes arylènes,
X étant un atome d'halogène,
m étant un nombre supérieur ou égal à 1, de préférence égal à 1.

## Patentansprüche

1. Triblockpolymer der Formel B-A-B, in der das Symbol A für einen Block, der als zentraler Block bezeichnet wird, steht, bei dem es sich um ein statistisches Copolymer handelt, das Einheiten eines 1,3-Diens und mehr als 50 Mol-% Ethyleneinheiten umfasst, und die Symbole B jeweils für einen Block, der als endständiger Block bezeichnet wird, stehen, wobei es sich um ein Polyethylen mit einer Schmelztemperatur von mehr als 90 °C und einer zahlenmittleren Molmasse größer oder gleich 2000 g/mol und kleiner oder gleich 10.000 g/mol handelt, wobei der Gehalt der Ethyleneinheiten in dem zentralen Block als molarer Prozentanteil, bezogen auf die Zahl der Mole der Monomereinheiten, aus denen der zentrale Block aufgebaut ist, ausgedrückt wird.

2. Triblockpolymer nach Anspruch 1, wobei es sich bei dem zentralen Block um ein statistisches Copolymer von Ethylen und 1,3-Dien handelt.

3. Triblockpolymer nach Anspruch 1 oder 2, wobei der zentrale Block mehr als 60 Mol-% Ethyleneinheiten, vorzugsweise mindestens 70 Mol-% Ethyleneinheiten, enthält.

4. Triblockpolymer nach einem der Ansprüche 1 bis 3, wobei der zentrale Block höchstens 90 Mol-% Ethyleneinheiten enthält.

5. Triblockpolymer nach einem der Ansprüche 1 bis 4, wobei der zentrale Block höchstens 85 Mol-% Ethyleneinheiten enthält.

6. Triblockpolymer nach einem der Ansprüche 1 bis 5, wobei der zentrale Block eine Glasübergangstemperatur zwischen -90 °C und -20 °C aufweist.

7. Triblockpolymer nach einem der Ansprüche 1 bis 6, wobei der zentrale Block eine zahlenmittlere Molmasse größer oder gleich 3000 g/mol und kleiner oder gleich 80.000 g/mol aufweist.

8. Triblockpolymer nach einem der Ansprüche 1 bis 7, wobei es sich bei dem 1,3-Dien um 1,3-Butadien oder Isopren oder auch eine Mischung von 1,3-Dienen, von denen eines 1,3-Butadien ist, vorzugsweise 1,3-Butadien, handelt.

9. Triblockpolymer nach einem der Ansprüche 1 bis 8, wobei es sich bei dem 1,3-Dien um 1,3-Butadien oder eine Mischung von 1,3-Dienen, von denen eines 1,3-Butadien ist, handelt und der zentrale Block 1,2-Cyclohexandiyleinheiten oder 1,4-Cyclohexandiyleinheiten, vorzugsweise 1,2-Cyclohexandiyleinheiten, enthält.

10. Triblockpolymer nach einem der Ansprüche 1 bis 9, wobei es sich bei dem Polymer um ein Elastomer handelt.

11. Zusammensetzung, die ein Triblockpolymer nach einem der Ansprüche 1 bis 10 und eine andere Komponente umfasst.

12. Verfahren zur Synthese eines Triblockpolymers gemäß einem der Ansprüche 1 bis 10, dass die statistische Copolymerisation einer Monomerenmischung, die Ethylen und ein 1,3-Dien enthält, und dann die anschließende Polymerisation von Ethylen in Gegenwart eines katalytischen Systems auf Basis von mindestens einem Metallocen der Formel (I) und einer Organomagnesiumverbindung der Formel (II) oder (III) umfasst,
P(Cp¹Cp²)Nd(BH₄)_{(1+y)}Li_{y}(THF)ₓ (I)
R^{B}-(Mg-R^{A})ₘ-Mg-R^{B} (II)
X-Mg-R^{C}-Mg-X (III)
wobei Cp¹ und Cp² gleich oder verschieden sind und aus der Gruppe bestehend aus Cyclopentadienylgruppen und Fluorenylgruppen ausgewählt sind, wobei die Gruppen substituiert oder unsubstituiert sind, wobei P für eine Gruppe steht, die die beiden Gruppen Cp¹ und Cp² verbrückt und für eine Gruppe ZR¹R² steht, wobei Z für ein Silicium- oder Kohlenstoffatom steht, wobei R¹ und R² gleich oder verschieden sind und jeweils für eine Alkylgruppe mit 1 bis 20 Kohlenstoffatomen, vorzugsweise ein Methyl, stehen, wobei y eine ganze Zahl gleich oder größer als 0 ist,
wobei x ganzzahlig oder nicht ganzzahlig ist und gleich oder größer als 0 ist,
wobei R^{A} für eine zweiwertige aliphatische Kohlenwasserstoffkette, die gegebenenfalls durch ein oder mehrere Sauerstoff- oder Schwefelatome oder auch durch eine oder mehrere Arylengruppen unterbrochen ist, steht,
wobei R^{B} einen durch ein Magnesiumatom substituierten Benzolkern umfasst, wobei eines der Kohlenstoffatome des Benzolkerns in ortho-Position zu dem Magnesium durch ein Methyl, ein Ethyl oder ein Isopropyl substituiert ist oder mit dem Kohlenstoffatom, das sein nächster Nachbar ist und das in meta-Position zu dem Magnesium steht, einen Ring bildet, wobei das andere Kohlenstoffatom des Benzolkerns in ortho-Position zu dem Magnesium durch ein Methyl, ein Ethyl oder ein Isopropyl substituiert ist,
wobei R^{C} für eine zweiwertige aliphatische Kohlenwasserstoffkette, die gegebenenfalls durch ein oder mehrere Sauerstoff- oder Schwefelatome oder auch durch eine oder mehrere Arylengruppen unterbrochen ist, steht,
wobei X für ein Halogenatom steht,
wobei m eine Zahl größer oder gleich 1 und vorzugsweise gleich 1 ist.

## Claims

1. Triblock polymer of formula B-A-B in which the symbol A represents a "central" block which is a statistical copolymer comprising units of a 1,3-diene and more than 50 mol% of ethylene units, and the symbols B each represent an "end" block which is a polyethylene with a melting point of greater than 90°C and a number-average molar mass of greater than or equal to 2000 g/mol and less than or equal to 10 000 g/mol, the content of the ethylene units in the central block being expressed as a molar percentage relative to the number of moles of monomer units constituting the central block.

2. Triblock polymer according to Claim 1, in which the central block is a statistical copolymer of ethylene and 1,3-diene.

3. Triblock polymer according to Claim 1 or 2, in which the central block contains more than 60 mol% of ethylene units, preferably at least 70 mol% of ethylene units.

4. Triblock polymer according to any one of Claims 1 to 3, in which the central block contains not more than 90 mol% of ethylene units.

5. Triblock polymer according to any one of Claims 1 to 4, in which the central block contains not more than 85 mol% of ethylene units.

6. Triblock polymer according to any one of Claims 1 to 5, in which the central block has a glass transition temperature of between -90°C and -20°C.

7. Triblock polymer according to any one of Claims 1 to 6, in which the central block has a number-average molar mass of greater than or equal to 3000 g/mol and less than or equal to 80 000 g/mol.

8. Triblock polymer according to any one of Claims 1 to 7, in which the 1,3-diene is 1,3-butadiene, isoprene or a mixture of 1,3-dienes, one of which is 1,3-butadiene, preferably 1,3-butadiene.

9. Triblock polymer according to any one of Claims 1 to 8, in which the 1,3-diene is 1,3-butadiene or a mixture of 1,3-dienes, one of which is 1,3-butadiene and the central block contains 1,2-cyclohexanediyl units or 1,4-cyclohexanediyl units, preferably 1,2-cyclohexanediyl units.

10. Triblock polymer according to any one of Claims 1 to 9, in which the polymer is an elastomer.

11. Composition which comprises a triblock polymer according to any one of Claims 1 to 10 and another component.

12. Process for synthesizing a triblock polymer defined in any one of Claims 1 to 10, which comprises the statistical copolymerization of a monomer mixture containing ethylene and a 1,3-diene, followed by the subsequent polymerization of ethylene in the presence of a catalytic system based on at least one metallocene of formula (I) and an organomagnesium reagent of formula (II) or (III)
P(Cp¹Cp²)Nd(BH₄)_{(1+y)}Li_{y}(THF)ₓ (I)
R^{B}-(Mg-R^{A})ₘ-Mg-R^{B} (II)
X-Mg-R^{C}-Mg- X (III)
Cp¹ and Cp², which are identical or different, being chosen from the group consisting of cyclopentadienyl groups and fluorenyl groups, the groups being substituted or unsubstituted,
P being a group bridging the two Cp¹ and Cp² groups and representing a ZR¹R² group, Z representing a silicon or carbon atom, R¹ and R², which are identical or different, each representing an alkyl group comprising from 1 to 20 carbon atoms, preferably a methyl,
y, which is an integer, being equal to or greater than 0,
x, which may or may not be an integer, being equal to or greater than 0,
R^{A} being a divalent aliphatic hydrocarbon-based chain, interrupted or not with one or more oxygen or sulfur atoms or with one or more arylene groups,
R^{B} comprising a benzene nucleus substituted with the magnesium atom, one of the carbon atoms of the benzene nucleus ortho to the magnesium being substituted with a methyl, an ethyl, an isopropyl or forming a ring with the carbon atom which is its closest neighbour and which is meta to the magnesium, the other carbon atom of the benzene nucleus ortho to the magnesium being substituted with a methyl, an ethyl or an isopropyl,
R^{C} being a divalent aliphatic hydrocarbon-based chain, interrupted or not with one or more oxygen or sulfur atoms or with one or more arylene groups,
X being a halogen atom,
m being a number greater than or equal to 1 and preferably equal to 1.
